# EUROPEAN PATENT APPLICATION

(11) **EP 1 944 936 A1**
(43) Date of publication of application: **16.07.2008**
(21) Application number: 06791133.9
(22) Date of filing: 27.09.2006
(51) Int. Cl.: H04L 29/04

(54) **A METHOD FOR PROTECTING THE SERVICE FLOW AND A NETWORK DEVICE**

(30) Priority: 02.11.2005 CN 200510117499
(71) Applicant: Huawei Technologies Co., Ltd., Bantian-Longgang District 518129 Shenzhen Guangdong (CN)
(72) Inventor: HUANG, He, 18129 Shenzhen Guangdong (CN)
(74) Representative: Pfenning, Meinig & Partner GbR
(86) International application number: PCT/CN2006/002545
(87) International publication number: WO 2007/051388

(57) **Abstract**

A method for protecting the service flow is provided, wherein a back path is preset between the source node and the destination entity, the method includes steps: A, the source node switches the service flow to the backup path and transmits the service flow to the destination entity through the backup path, at the same time, the source node computes a hypo-excellent path by the route algorithm, and compares the hypo-excellent path with the backup path, if the hypo-excellent path is more excellent than the backup path, then implements the step B, if not, ends the program. B, the source node switches the service flow to the hypo-excellent path and transmits the service flow to the destination entity through the hypo-excellent path. A network device implementing the method for protecting the service flow is also provided. The method for protecting the service flow in the invention has the ability that the fast fault restoration.

## Description

### Field of the Invention

The present invention relates to a traffic flow protection technology in communication network, particularly a traffic flow protection method and IP network device in IP communication network.

### Background of the Invention

In current communication network, in order to transmit a traffic flow from a source node to a target entity, the source node first calculates an optimal path from the source node to the target entity based on a routing algorithm. In a normal situation of a steady network and a convergent route, the optimal path obtained by a route calculation is called a primary path. After acquiring the primary path, the source node could transmit the traffic flow to a next hop node of the primary path. The next hop node of the primary path forwards the traffic flow to the target entity. In the context, a link between the source node and the next hop node in the primary path is called a primary link. The source node in the text could be a network, a node or a particular network device and the target entity could be a network, a node or a particular network device.

When the primary path is invalid due to failure, the source node will recalculate the optimal path from the source node to the target entity. The optimal path obtained by calculating route when the primary path is under failure is called a sub-optimal path. After acquiring the sub-optimal path, the source node could transmit the traffic flow to a next hop node in the sub-optimal path. The next hop node in the sub-optimal path will forward the traffic flow to the target entity. In the text, a link between the source node and the next hop node in the sub-optimal path is called a sub-optimal link.

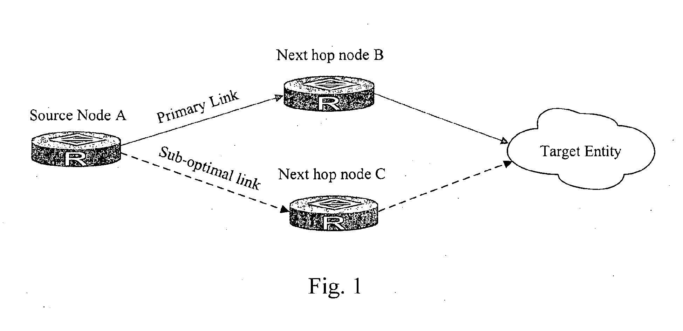

Figure 1 is a principle view of the traffic flow protection method of the prior art. As illustrated in Figure 1, a traffic flow is transmitted from a source node A to a target entity. In the normal situation of the steady network and the convergent route, the source node transmits the traffic flow via a primary link to a next hop node B in a primary path. The next hop node B in the primary path will forward the traffic flow to the target entity. When the primary path is invalid, the source node will transmit the traffic flow via a sub-optimal link to a next hop node C in a sub-optimal path, and the next hop node C in the sub-optimal path forwards the traffic flow to the target entity.

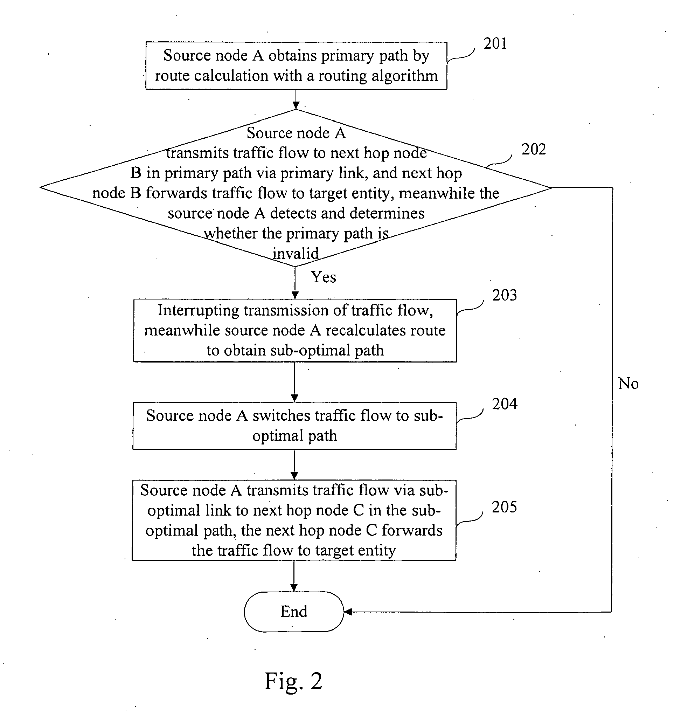

Figure 2 is a flow chart of the traffic flow protection method of the prior art. The method includes:

Steps 201-202: the source node A obtains the primary path by a route calculation with a routing algorithm. The source node A transmits the traffic flow via the primary link to the next hop node B in the primary path. The next hop node B in the primary path forwards the traffic flow to the target entity, and meanwhile the source node A detects and determines whether the primary path is invalid. If the primary path is invalid, the process proceeds to step 203 and its following steps. If the primary path is not invalid, the flow ends. A detection of the primary path by the source node A may be a periodic detection or a real-time detection.

Steps 203-205: the traffic flow transmission is interrupted, meanwhile the source node A recalculates the route to obtain the sub-optimal path; the source node A switches the traffic flow to the sub-optimal path; the source node A transmits the traffic flow via the sub-optimal link to the next hop node C in the sub-optimal path, the next hop node C in the sub-optimal path forwards the traffic flow to the target entity.

It can be seen that, in the prior art, the transmission of the traffic flow is interrupted immediately when the primary path becomes invalid because of failure. Only after recalculating route to obtain the sub-optimal path and performing corresponding switch, the transmission of traffic flow could be recovered. Because the time for calculating the route is usually at second-level, the failure recovery time from detecting the failure of primary path to switching the traffic flow to the sub-optimal path is at least at the second-level, even if the time for switching is not taken into consideration. For the communication network carrying Internet service at an early state, the traffic flow protection method of the prior art can substantially meet the needs of communication network, because the demand for the network real-time performance and reliability is not high. However, with the rapid development of current network service, the communication networks carries more and more real-time or quasi real-time services, such as voice and video which usually requires failure recovery time up to millisecond-level. It is obvious that the traffic flow protection method of the prior art can not meet the requirements of these services.

### Summary of the invention

Therefore, it is an object of the invention to provide a traffic flow protection method having rapid failure recovery capability.

It is also an object of the present invention to provide a network device having rapid failure recovery capability.

The present invention provides a traffic flow protection method. In the method, a backup path between a source node and a target entity is preset, the method includes the following steps:

A: switching, by the source node, a traffic flow to a backup path, to transmit the traffic flow to the target entity via the backup path, meanwhile obtaining, by the source node, a sub-optimal path by a route calculation with a routing algorithm and comparing whether the sub-optimal path is superior to the backup path, if the sub-optimal path is superior to the backup path, step B is performed, and if the sub-optimal path is not superior to the backup path, the flow ends;

B: switching, by the source node, the traffic flow to the sub-optimal path, to transmit the traffic flow to the target entity via the sub-optimal path.

The communication network may be an IP network.

The detection may be a periodic detection or a real-time detection.

The target entity may be a target node, a target network or a target network device.

According to another aspect of the above purpose, the invention also provides a network device, including a Transmission and Detection Module, for switching a traffic flow to a stored backup path which can transmit the traffic flow to a target entity, and transmitting the traffic flow to the target entity by the backup path when a primary path is detected to be invalid;

a Route Calculation Module, for calculating a sub-optimal path adapted for transmitting the traffic flow to the target entity when the primary path is invalid; and

a Path Determination Module, for comparing the sub-optimal path calculated by the Route Calculation Module and the backup path stored by the Transmission and Detection Module, to determine whether the sub-optimal path is superior to the backup path,

in which, the Transmission and Detection Module switches the traffic flow to the sub-optimal path and transmits the traffic flow to the target entity via the sub-optimal path if the Path Determination Module determines that the sub-optimal path is superior to the backup path.

The network device may be an IP network device.

In the traffic flow protection method provided by the invention, a backup path is preset, and when a primary path is invalid, a traffic flow is switched to the backup path immediately, and meanwhile a route is recalculated. Within the time interval until obtaining a sub-optimal path by calculation, a source node transmits the traffic flow via a backup link to a next hop node in the backup path. The next hop node in the backup path forwards the traffic flow to the target entity. If the calculated sub-optimal path is superior to the backup path, the traffic flow is switched to the sub-optimal path; and if the calculated sub-optimal path is not superior to the backup path, the traffic flow is transmitted still by the backup path. Because the whole process involves only one or two link switching and the time for link switching is often at millisecond-level, the failure recovery time of the traffic flow is also at millisecond-level, which can sufficiently meet the requirements of real-time or quasi real-time communication services, such as voice and video.

### Brief Description of the Drawings

Figure 1 is a principle view of a traffic flow protection method of the prior art;

Figure 2 is a flow chart of a traffic flow protection method of the prior art;

Figure 3 is a principle view of a traffic flow protection method of the invention;

Figure 4 is a flow chart of a traffic flow protection method of the invention; and

Figure 5 is a structure view of a network device of the invention.

### Detailed Description of the Embodiments

In the present invention, a backup path is preset, and when a primary path is invalid, a traffic flow is switched to the backup path immediately, and meanwhile a route is recalculated. Hereafter, within the time interval until obtaining a sub-optimal path by calculation, a source node transmits the traffic flow via a backup link to a next hop node in the backup path. The next hop node in the backup path forwards the traffic flow to a target entity.

In order to make the purpose, technical solution and advantage of the invention much clearer and easier to understand, the present invention is further detailed by embodiments, with reference to the accompanying figures.

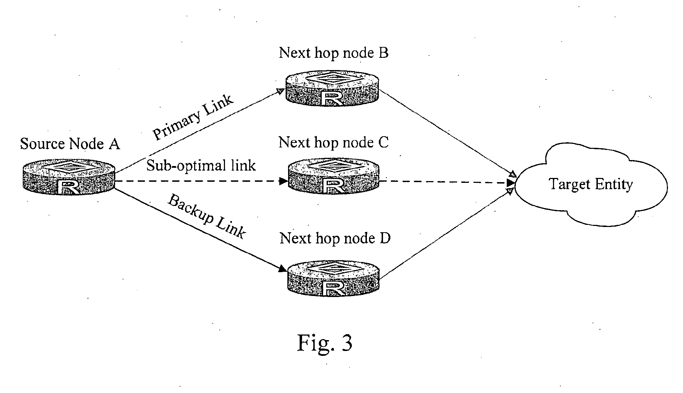

Figure 3 is a principle view of the traffic flow protection method of the invention. As illustrated in Figure 3, a backup path that can transmit a traffic flow to a target entity is pre-setup between source node A and the target entity. In the normal situation of the steady network and the convergent route, the source node transmits the traffic flow to a next hop node B in a primary path. The next hop node B in the primary path forwards the traffic flow to the target entity. When the primary path is invalid, the traffic flow is switched to the backup path immediately. The source node may transmit the traffic flow to a next hop node D in the backup path. The next hop node D in the backup path forwards the traffic flow to the target entity. In the context a link between source node A and the next hop node in the backup path is called a backup link.

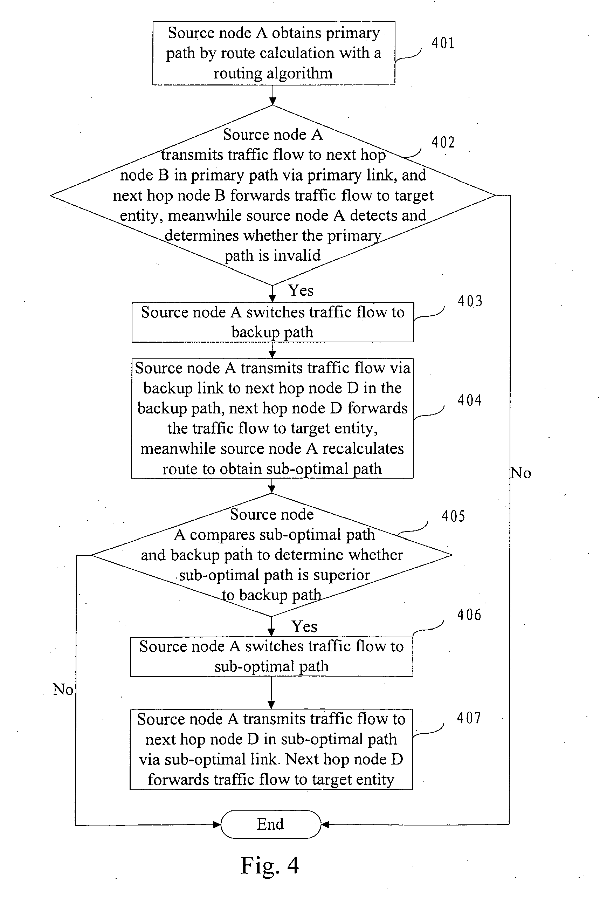

Figure 4 is the flow chart of the traffic flow protection method of the invention. The traffic flow protection method includes:

Steps 401-402: the source node A obtains the primary path by a route calculation with a routing algorithm; the source node A transmits the traffic flow via a primary link to the next hop node B in the primary path; the next hop node B in the primary path forwards the traffic flow to the target entity, meanwhile source node A detects and determines whether the primary path is invalid. If the primary path is invalid, step 403 and the following steps are performed. If the primary path is not invalid, the flow ends. The detection of the primary path by source node A may be a periodic detection or a real-time detection.

Steps 403-405: the source node A switches the traffic flow to the backup path; the source node A transmits the traffic flow through the backup link to the next hop node D in the backup path; the next hop node D in the backup path forwards the traffic flow to the target entity, meanwhile the source node A recalculates a route to obtain a sub-optimal path. The source node A compares the sub-optimal path and the backup path to determine whether the sub-optimal path is superior to the backup path. If the sub-optimal path is superior to the backup path, step 406 and the following steps are performed. If the sub-optimal path is not superior to the backup path, the flow ends. The term "superior to" here means shorter path, better link situation or larger bandwidth.

Steps 406-407: the source node A switches the traffic flow to the sub-optimal path; the source node A transmits the traffic flow via a sub-optimal link to a next hop node D in the sub-optimal path; and the next hop node D in the sub-optimal path forwards the traffic flow to the target entity.

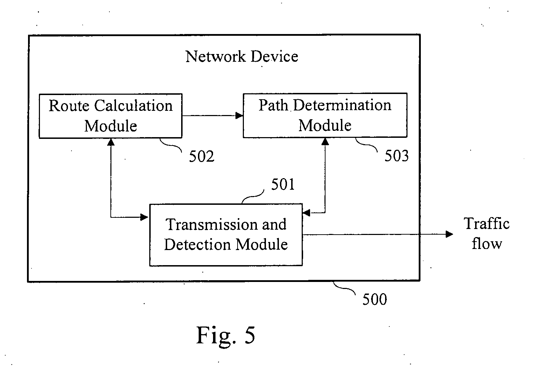

Figure 5 is a structure view of the network device of the invention, used to implement the traffic flow protection method of the invention. The network device 500 of the invention includes: Transmission and Detection Module 501, Route Calculation Module 502, and Path Determination Module 503 connecting with each other in a communicable way. The Transmission and Detection Module 501 stores a backup path that can transmit the traffic flow to the target entity.

The Transmission and Detection Module 501 is adapted to send a traffic flow to the target entity and detect the path for transmitting traffic flow. The detection may be a periodic detection or a real-time detection. Specifically, the Transmission and Detection Module 501 transmits the traffic flow to the target entity via a primary path acquired from the Route Calculation Module 502, meanwhile detects and determines whether the primary path is invalid and if the primary path is invalid, the Transmission and Detection Module 501 switches the traffic flow to the stored backup path and transmits the traffic flow to the target entity via the backup path, meanwhile notifies the Route Calculation Module 502 to recalculate the route, and when acquiring from the Path Determination Module 503 that the sub-optimal path calculated by the Route Calculation Module 502 is superior to the backup path, switches the traffic flow to the sub-optimal path and transmits the traffic flow to target entity via the sub-optimal path link.

The Route Calculation Module 502 is adapted to calculate the optimal path for transmitting the traffic flow to the target entity. In the normal situation of steady network and convergent route, the Route Calculation Module 502 calculates the optimal path and obtains the primary path, and sends the calculated primary path to Transmission and the Detection Module 501. When the primary path is in failure, the Route Calculation Module 502 calculates the optimal path and obtains the sub-optimal path, and sends the calculated sub-optimal path to the Path Determination Module 503.

The Path Determination Module 503 is adapted to compare the sub-optimal path calculated by the Route Calculation Module 502 and the backup path stored by the Transmission and Detection Module 501, determine whether the sub-optimal path is superior to the backup path, and send the compare result to the Transmission and Detection Module 501.

The above description is only a preferred embodiment of the invention, and is not used to restrict the protection scope of the invention.

## Claims

1. A method for protecting traffic flow, wherein a backup path is preset between a source node and a target entity, the method comprising:
A: switching, by the source node, a traffic flow to a backup path, to transmit the traffic flow to the target entity via the backup path, meanwhile obtaining, by the source node, a sub-optimal path by a route calculation with a routing algorithm and comparing whether the sub-optimal path is superior to the backup path, if the sub-optimal path is superior to the backup path, step B is performed, and if the sub-optimal path is not superior to the backup path, the flow ends;
B: switching, by the source node, the traffic flow to the sub-optimal path, to transmit the traffic flow to the target entity via the sub-optimal path.

2. The method according to claim 1, wherein the communication network is an IP network.

3. The method according to claim 1 or 2, wherein the detection is a periodic detection or a real-time detection.

4. The method according to claim 1 or 2, wherein the target entity is a target node, a target network or a target network device.

5. A network device comprising:
Transmission and Detection Module, configured for switching a traffic flow to a stored backup path adapted for transmitting the traffic flow to a target entity, and transmitting the traffic flow to the target entity via the backup path upon detecting that a primary path is invalid;
Route Calculation Module, configured for calculating a sub-optimal path adapted for transmitting the traffic flow to the target entity when the primary path is invalid; and
Path Determination Module, configured for comparing the sub-optimal path calculated by the Route Calculation Module and the backup path stored by the Transmission and Detection Module, to determine whether the sub-optimal path is superior to the backup path,
wherein, the Transmission and Detection Module switches the traffic flow to the sub-optimal path and transmits the traffic flow to the target entity via the sub-optimal path if the Path Determination Module determines that the sub-optimal path is superior to the backup path.

6. The device according to claim 5, wherein the network device is an IP network device.

7. The device according to claim 5 or 6, wherein the Transmission and Detection Module periodically detects the primary path or detects the primary path in real-time.

8. The device according to claim 5 or 6, wherein the target entity is a target node, a target network or a target network device.
